(19) Europäisches Patentamt
European Patent Office
Office européen des brevets

(11) Veröffentlichungsnummer: **0 228 565**
**A2**

(12) # EUROPÄISCHE PATENTANMELDUNG

(21) Anmeldenummer: **86116284.0**

(22) Anmeldetag: **24.11.86**

(51) Int. Cl.[4]: **C 09 K 3/10**
C 09 J 3/00, C 09 D 5/00

(30) Priorität: **02.12.85 DE 3542512**

(43) Veröffentlichungstag der Anmeldung:
**15.07.87 Patentblatt 87/29**

(84) Benannte Vertragsstaaten:
**AT BE CH DE FR GB IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Nicolaisen, Heinz-Christian**
**Ossietzkyring 4**
**D-3000 Hannover 91(DE)**

(72) Erfinder: **Kammer, Lothar**
**Geibelstrasse 102**
**D-3000 Hannover 1(DE)**

(72) Erfinder: **Gruber, Werner, Dr.**
**Franz-Karl-Kremer-Strasse 7**
**D-4052 Korschenbroich 1(DE)**

(72) Erfinder: **Marten, Klaus, Dr.**
**Röntgenstrasse 2**
**D-4010 Hilden(DE)**

(54) **Dichtungs- und Klebmittel, Vergussmassen und Überzugsmittel auf Basis von Methacrylsäureestern.**

(57) Dichtungs- und Klebmittel, Vergußmassen und Überzugsmittel auf Basis von polymerisierbaren Methacrylsäureestern sowie gegebenenfalls weitere Hilfsstoffe enthalten

a) 0,05 bis 5 Gewichtsteile organischer Aminoxide

b) 0,1 bis 10 Gewichtsteile einer HN-aciden Verbindung und

c) 0,01 bis 10 Gewichtsteile eines Fotoinitiators, der geeignet ist, eine Polymerisation bei Einstrahlung von kurzwelligem Licht (UV) zu initiieren,

bezogen auf 100 Gewichtsteile der polymerisierbaren Methacrylsäureester.

EP 0 228 565 A2

Henkel KGaA
29.11.1985
Dr.SchOe/Ge

Patentanmeldung

D 7461 EP

"Dichtungs- und Klebmittel, Vergußmassen und Überzugsmittel auf Basis von Methacrylsäureestern"

Die vorliegende Erfindung betrifft neuartige härtbare Zusammensetzungen auf Basis von Methacrylsäureestern, insbesondere von di- und/oder trifunktionellen Alkoholen sowie deren Verwendung als Dichtungsmittel und/oder Klebmittel, Vergußmassen und Überzugsmittel.

Durch Einwirkung von UV-Strahlung härtende Klebmittel oder Überzugsmittel auf Basis von Acrylsäureestern, insbesondere mehrwertiger Alkohole, sind seit langem bekannt. Derartige Mittel werden in den verschiedensten Variationen, insbesondere unter Zusatz von Fotoinitiatoren, angeboten. Geht man jedoch zu Methacrylsäureestern über, treten Schwierigkeiten auf. Derartige Verbindungen lassen sich in aller Regel nur unbefriedigend durch Einstrahlung von kurzwelligem Licht, auch unter Zusatz von Fotoinitiatoren, polymerisieren.

Weiterhin ist es Stand der Technik, anaerobe Klebmittel oder Dichtungsmittel auf Basis von Methacrylsäureestern mehrwertiger Alkohole herzustellen. Neben Hydroperoxiden können hier zur Aktivierung unter anaeroben Bedingungen Gemische aus HN-aciden Verbindungen und organischen Aminoxiden eingesetzt werden(EP-Patentschrift 61 105). Derartige anaerob härtende Mischungen können aber auch mit Hydroperoxiden hergestellt werden, wobei jedoch die bekannten Unannehmlichkeiten, welche Hydroperoxide mit sich bringen, zu beobachten sind.

. . .

Aufgabe der vorliegenden Erfindung war es daher, solche Mischungen auf Basis von Methacrylsäureestern zu finden, die einerseits als Überzugs- oder Klebmittel sowohl anaerob wie durch UV-Einstrahlung härtbar sein sollen, andererseits aber auch unter nur anaeroben Bedingungen gut durchhärtende Dichtungsmittel und Vergußmassen ergeben. Eine weitere Aufgabe bestand darin, insbesondere durch die Kombination der Zusätze auch eine Härtung in dickeren Schichten zu bewirken, so daß beim Einsatz der Mischungen als Dichtungsmittel, Vergußmassen oder auch zur Ausbildung von Formkörpern eine völlige Durchhärtung folgt.

Erfindungsgemäß wird die vorliegende Aufgabe gelöst durch Mischungen auf Basis von Methacrylsäureestern, welche gekennzeichnet sind durch einen zusätzlichen Gehalt von

a) 0,05 bis 5 Gewichtsteilen organischer Aminoxide
b) 0,1 bis 10 Gewichtsteile einer HN-aciden Verbindungen und
c) 0,01 bis 10 Gewichtsteile eines Fotoinitiators, der geeignet ist eine Polymerisation bei Einstrahlung von kurzwelligem Licht (UV) zu initiieren,

bezogen auf 100 Gewichtsteile der polymerisierbaren Methacrylsäureester.

Nach einer vorteilhaften Ausführungsform besteht die den Methacrylsäureestern zugesetzte Kombination aus

a) 0,2 - 5 Gewichtsteilen organischer Aminoxide,
b) 0,2 - 5 Gewichtsteilen einer HN-aciden Verbindung und
c) 0,05 - 5 Gewichtsteilen eines Fotoinitiators,

bezogen auf 100 Gewichtsteile des polymerisierbaren Materials.

Als Basis für die erfindungsgemäßen Systeme sind geeignet Methacrylsäureester von ein- und mehrwertigen Alkoholen wie

. . .

Methanol, Ethanol, Hexanol, Decanol, Ethylenglykol, Diethylenglykol, Triethylenglykol, Tetraethylenglykol, Polyethylenglykol, Glycerin, Pentandiol, Di-, Tri- oder Tetrapropylenglykol oder auch Methacrylsäureester von dimerisiertem oder polymerisiertem Cyclopentadien oder von Tetrahydrofurfurylalkohol. Auch sind noch freie Hydroxylgruppen enthaltende Methacrylsäureester brauchbar wie Hydroxyethylmethacryl- oder Glycerinmono-methacrylsäureester.

Als Monomere sind weiterhin geeignet die Dimethacrylsäureester des Bis-(ethylenglykol)adipats oder des Maleats oder des Phthalats. Auch die Dimethacrylsäureester des Bis-(diethylenglykol)maleats des Bis-(tetraethylenglykol)-phthalats oder des Bis-(triethylenglykol)sebazats stellen geeignete polymerisierbare Ausgangsmaterialien dar.

Eine geeignete Basis stellen weiterhin die Umsetzungsprodukte von Diisocyanaten mit Hydroxyalkyl-methacrylaten oder Aminoalkylmethacrylaten dar. Dabei handelt es sich um niedermolekulare Polyurethane und Polyharnstoffe mit endständigen Methacrylsäureestergruppierungen. Der Alkylrest kann zwischen etwa 2 und 18 Kohlenstoffatome aufweisen und auch cyclisch sein wie etwa der Cyclohexylrest. Auch ist es möglich, anstelle des Alkylrestes einen aromatischen Rest zu haben. Erwähnenswert sind in diesem Zusammenhang die Reaktionsprodukte aus aromatischen Isocyanaten wie dem Toluylendiisocyanat, dem Diphenylmethandiisocyanat oder auch dem Isophorondiisocyanat mit Hydroxyethylmethacrylsäureester oder Hydroxypropylmethacrylsäureester.

Außerdem kommen als eine geeignete Basis für erhärtende Systeme gemäß der Erfindung in Betracht Methacrylate, die sich durch Umsetzung von Methacrylsäure oder deren Estern mit Diphenylolpropan ableiten. Auch können derartige Umsetzungsprodukte

...

von anderen bifunktionellen Phenolen verwendet werden. In vielen Fällen werden die genannten Phenole vor der Umsetzung mit Methacrylsäure mit 2 bis 10 Mol Ethylenoxid bzw. Propylenoxid zur Reaktion gebracht.

Ferner sind eine brauchbare Basis für die erfindungsgemäßen Systeme die Dimethacrylsäureester von Halbestern aus Diolen und Carbonsäureanhydriden mit Glycidylmethacrylat. Zur Herstellung dieser Verbindungen setzt man zunächst Diole wie Ethylenglykol, Diethylenglykol, Propylenglykol, Butandiol-1,4. Hexandiol-1,6 oder Oxystearylalkohol mit den Anhydriden von Carbonsäuren wie Bernsteinsäureanhydrid, Maleinsäureanhydrid oder Phthalsäureanhydrid zu den Halbestern um. Die noch freien Carboxylgruppen werden dann mit Glycidylmethacrylat in die Methacrylsäureester überführt.

Schließlich sind erwähnenswert die Dimethacrylsäureester, welche sich ableiten vom Bis-(hydroxymethyl)tricyclodecan.

Selbstverständlich werden diese Monomeren im allgemeinen nicht allein eingesetzt, sondern Mischungen von ihnen, um optimale Festigkeitswerte und Härtungszeiten zu erhalten. Neben den Methacrylsäureestern der vorstehend genannten Alkohole können bis etwa 25 Mol% Acrylsäureester vorhanden sein.

Nach einer bevorzugten Ausführungsform enthalten die Aminoxide wenigstens einmal die Gruppierung

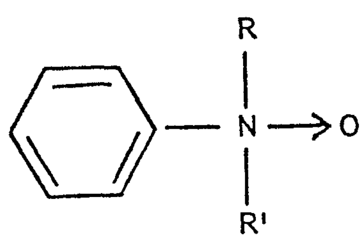

. . .

wobei der aromatische Rest auch substituiert sein kann, und R beziehungsweise R' einen Alkylrest mit 1 bis 12 Kohlenstoffatomen bedeuten. Unter den Aminoxiden ist aus praktischen Erwägungen das des N,N-Dimethylanilins, N,N-Dimethyltoluidins, Chlor-N,N-dimethylanilins sowie des N,N-Dimethylnaphthylamins bevorzugt. Brauchbar sind aber auch die Aminoxide des N,N,N',N'-Tetramethylphenylendiamins und ähnlich aufgebauter Verbindungen. Die Aminoxide können gegebenenfalls auch in Form ihrer Salze, zum Beispiel mit Carbonsäuren wie Essigsäure, Ameisensäure, Oxalsäure, Weinsäure oder dergleichen eingesetzt werden.

Nach einer weiteren vorteilhaften Ausführungsform enthalten die erfindungsgemäßen Gemische von Methacrylsäureestern noch Sulfonsäure- und/oder Carbonsäurehydrazide und/oder Sulfimide und/oder Acylcyanamide und/oder Disulfonylimide als HN-acide Verbindungen.

Geeignete Sulfonsäurehydrazide leiten sich beispielsweise von Benzolsulfonsäure, o- und p-Toluolsulfonsäure, $\alpha$- und $\beta$-Naphthalinsulfonsäure, p-Chlorbenzolsulfonsäure, p-Brombenzolsulfonsäure und dergleichen mehr ab. Auch die Hydrazide von Cyclohexylsulfonsäuren, Camphersulfonsäure, Hexadecansulfonsäure können eingesetzt werden.

Ferner können die Sulfonsäurehydrazide am Stickstoff substituiert sein, beispielsweise durch Alkyl-, Cycloalkyl-, Acylgruppen oder durch aromatische Reste wie dem Phenylrest. Beispiele für geeignete Sulfonsäurehydrazide sind:
N,N-Dimethyl-N'-benzolsulfonsäurehydrazid,

. . .

N-Acyl-N'-benzolsulfonsäurehydrazid,
N-Methyl-N'-benzolsulfonsäurehydrazid,
N-Methyl-N'-p-toluolsulfonsäurehydrazid,
N,N-Dimethyl-N'-p-toluolsulfonsäurehydrazid,
N-Isopropyl-N'-p-toluolsulfonsäurehydrazid,
N-Cyclohexyl-N'-p-toluolsulfonsäurehydrazid,
N,N-Di-n-butyl-N'-p-toluolsulfonsäurehydrazid,
N-n-Hexyl-N'-p-chlorbenzolsulfonsäurehydrazid,
N,N-Diethyl-N'-p-chlorbenzolsulfonsäurehydrazid.

Als Carbonsäurehydrazide kommen solche in Frage, die sich ableiten von Carbonsäuren wie etwa Essigsäure, Propionsäure, Benzoesäure, Cyclohexancarbonsäure, Cyclohexandicarbonsäure, Bernsteinsäure, Sebacinsäure. Mit gutem Erfolg lassen sich auch die Carbazide sowohl des Ethylesters als auch des tert.-Butylesters der Kohlensäure verwenden.

Unter den Sulfimiden ist das Benzoesäuresulfimid am wirksamsten. Die einsetzbaren Disulfonylimide entsprechen der allgemeinen Formel

$$R - SO_2 - NH - SO_2 - R'$$

wobei R und R' für einen Alkyl-, Cycloalkyl- oder einen Arylrest stehen.

Geeignete Disulfonylamide leiten sich beispielsweise ab von Benzolsulfonsäure, p-Chlorbenzolsulfonsäure, Dichlorbenzolsulfonsäure, Toluolsulfonsäure, den isomeren Xylolmonosulfonsäuren, $\alpha$- oder $\beta$-Naphthalinsulfonsäure, Methoxy- oder Propoxybenzolsulfonsäuren, Diphenylsulfonsäure, Cumolsulfonsäure.

Als Acylcyanamide sind alle Verbindungen brauchbar, sofern sie in den Monomeren in hinreichender Menge löslich sind. Es kommen

. . .

die folgenden Acylcyanamide in Betracht: Acetylcyanamid, Propionylcyanamid, n-Butyrylcyanamid, iso-Butyrylcyanamid, Lauroylcyanamid, Myristoylcyanamid, Myristoylcyanamid, Stearoylcyanamid, Benzoylcyanamid, Naphtholoylcyanamid, Toluylcyanamid, Acylgruppen können auch sein die Nicotinylgruppe, Phenylacetylgruppe, Dichlorphenylacetylgruppe, Brom- oder Chloracetylgruppe, p-Methylphenylacetylgruppe, p-Nitrophenylpropionylgruppe und 4-Chlor-(brom)butionylgruppe.

Fakultativ kann zusätzlich ein organisches Amin als Hilfsbeschleuniger zusammen mit den erfindungsgemäßen Beschleunigern verwendet werden. Als Hilfsbeschleuniger seien isomere N,N-Dimethyltoluidine, N-Methyldiethanolamin und Tri-n-butylamin erwähnt. Sie sollen nur in sehr kleinen Mengen von 0,1 oder bis zu 2,5 Gewichtsprozent verwendet werden.

Aus der Gruppe der Fotoinitiatoren werden insbesondere die Benzilketale wie Benzildimethoxyethylketal, Benzildichlorethylketal oder Benzildimethylketal bevorzugt.

Geeignete Fotoinitiatoren sind aber auch folgende: 1-(4-Isopropylphenyl)-2-hydroxy-2-methyl-propan-1-on, 2-Hydroxy-2-methyl-1-phenyl-propan-1-on, 2-2-Diethoxyacetophenon, Benzoin-iso-Butylether, Benzoin-n-Butylether, Benzophenon, 2,4-Dihydroxybenzophenon, 2-Hydroxy-4-methoxybenzophenon, 2-Hydroxy-4-n-octoxybenzophenon, 1-Hydroxycyclohexylphenylketon, 2-Chlorthioxanthon, Thioxanthon, Ethyl-p-dimethylaminobenzoat, 4,4-Dimethylaminbenzophenon, Benzoin-isopropylether, p-tert.-Butyltrichloracetophenon, Benzil-(o-ethoxycarbonyl-α- monoxim), 2-Methyl-1- [4-methylthiophenyl] -2-morpholino-propanon-1, Benzoyloximester, Benzoylphosphinoxid und Michlers Keton.

Den erfindungsgemäßen universell einsetzbaren Kombinationen können auch insbesondere im Hinblick auf spezielle

. . .

Einsatzmöglichkeiten weitere an sich bekannte Hilfsstoffe zugegeben werden. Es handelt sich hier beispielsweise um Haftverbesserer bzw. Haftvermittler wie beispielsweise freie Acrylsäure oder Methacrylsäure sowie carboxylgruppenhaltige Methacrylsäureester oder epoxidgruppenhaltige Methacrylsäureester oder Methacrylsäureester von Cellulose. Als Verdickungsmittel sind geeignet polymere Verbindungen wie etwa Polymethyl(meth)acrylat, Polyethylacrylat, Polystyrol, Polyvinylchlorid, synthetischer Kautschuk und dergleichen. Als Füllstoffe eignen sich beispielsweise feinverteiltes Siliciumdioxid, Silikate, Bentonite, Calciumcarbonat, Titandioxid. Auch farbgebende Pigmente könnten beigemischt werden. Gewünschtenfalls kann auch ein Zusatz organischer Farbstoffe erfolgen. Schließlich ist eine Mitverwendung von sogenannten Weichmachern möglich, wie sie dem Fachmann der Kunststofftechnologie in den verschiedensten Variationen wohlbekannt sind.

Es muß als überraschend angesehen werden, daß dem an sich bekannten anaeroben System auf Basis von Methacrylsäurestern, HN-aciden Verbindungen und organischen Aminoxiden überhaupt Fotoinitiatoren zugegeben werden können, ohne daß ein schädigender Effekt auf Lagerstabilität des Systems, Aushärtungsgeschwindigkeit und Endfestigkeit der Klebefuge eintritt. Ferner war es überraschend, daß sowohl bei anaerober bzw. zunächst fotoinitiiertern und dann anaerob weitergeführter Polymerisation eine gleichmäßige Vernetzung auch der innenliegenden Schichten erfolgt, als auch bei nur fotoinitiierter Polymerisation nach sehr kurzer Zeit eine feste Verklebung zwischen durchsichtigen Substraten eintritt. Die zuerst erwähnte Eigenschaft ist besonders wichtig bei der Verwendung als spaltüberbrückende Bolzensicherung sowie bei Vergußmassen und der zweite Effekt für beispielsweise eine weitflächige Verklebung, von der eine rasche Vernetzung erwartet wird. Schließlich können mit den erfindungsgemäß härtenden Massen Klein- und Kleinst-

...

teile, insbesondere elektrische Bauelemente lunkerfrei vergossen und so gegen atmosphärische und mechanische Einflüsse geschützt werden. Die Durchhärtung erfolgt innerhalb weniger Stunden, auch bei zentimeterdicker Gießfläche bei geeigneter UV-Anregung.

. . .

## Beispiele

Zur Testung der erfindungsgemäßen Mischungen wurden folgende Prüfungen vorgenommen:

a) Handfestigkeit ohne Belichtung

b) Handfestigkeit nach Belichtung mit UV-Licht

c) Endfestigkeit

d) Stabilität

zu a) Handfestigkeitsprüfung an Schrauben (ohne UV-Licht Härtung)

Bei der Handfestigkeitsprüfung werden mehrere Tropfen der anaerob härtenden Masse auf die Gewindegänge einer entfetteten Messingschraube (M 10 x 30 DIN 933) aufgebracht und anschließend mit der dazugehörenden Mutter zusammengebracht. Von Zeit zu Zeit wird die Mutter etwas gegen die Schraube gedreht, um festzustellen, von welcher Zeit an die Mutter sich nicht mehr ohne besondere Kraftanstrengung von Hand auf der Schraube drehen läßt. Die bis dahin verstrichene Zeit wird als Maß für die Handfestigkeit angesehen.

zu b) Handfestigkeitsprüfung auf Glas mit UV-Licht

2 Objektträger (76 + 26 mm) von 1 mm Stärke wurden mit Klebstoff benetzt, 15 mm überlappt und aus 10 cm Abstand mit einer UV-Lampe bestrahlt.

zu c) Endfestigkeit

An verklebten Hülsen und Bolzen entsprechend DIN 54452 wurde mit und ohne UV-Licht die Druckscherfestigkeit nach 24-stündiger Härtung ermittelt.

zu d) Stabilität

Bei der Stabilitätsprüfung wurde ein 10 cm langes und 10 mm weites Reagenzglas zu 9/10 mit den Mischungen gefüllt und in ein

. . .

auf 80 °C gehaltenes Bad eingehängt. Die Zeitspanne vom Einhängen bis zur ersten Gebildung wurde gemessen. Sie lag in allen Fällen über 1 Stunde und entspricht erfahrungsgemäß einer Lagerfähigkeit von mehr als 1 Jahr bei Zimmertemperatur.

Zur Bestrahlung wurde eine 100 Watt Quecksilberdampflampe verwendet mit einem UVA-Anteil von 325-382 Nanometer der Firma American Ultraviolet, Chatham N.Y. . Die Intensität betrug bei dem in den Beispielen gewählten Abstand von 10 cm vom Objekt 40 $mWatt/cm^2$.

Beispiele 1-5

Zu 100 Gewichtsteilen Triethylenglykol-dimethacrylat wurden die aufgeführten Zusätze gegeben. In der nachfolgenden Tabelle 1 ist in Abhängigkeit von der laufenden Nummer des Beispiels die Art und Menge des Zusatzes wiedergegeben.

Tabelle 1

| | Beispiele | | | | |
|---|---|---|---|---|---|
| Zusatz | 1 | 2 | 3 | 4 | 5 |
| p-Toluolsulfonsäurehydrazid | 1 | - | 0,5 | - | 0,5 |
| Benzoesäuresulfimid | - | 1 | - | 0,5 | 0,5 |
| N,N-Dimethyl-p-toluidin-N-oxid | 1 | 1 | 1 | 0,5 | 0,5 |
| Benzildimethylketal | 1 | 2 | 1 | 2 | 1 |

In der nachfolgenden Tabelle 2 sind die Handfestigkeiten gemäß a) und b) in Minuten und die Endfestigkeit des Bespiels c) in Abhängigkeit von der laufenden Nummer wiedergegeben.

. . .

Tabelle 2

| Beispiele | 1 | 2 | 3 | 4 | 5 |
|---|---|---|---|---|---|
| Handfestigkeit ohne UV-Licht in Minuten | 2 | 5 | 2 | 5 | 4 |
| Handfestigkeit mit UV-Licht in Sekunden | <1 | <1 | <1 | <1 | <1 |
| Endfestigkeit $N/mm^2$ | 30 | 28 | 25 | 24 | 25 |

Beispiele 6-10

In der nachfolgenden Tabelle 3 ist die Zusammensetzung von erfindungsgemäßen Mischungen wiedergegeben. Die Zahlen bedeuten die laufenden Nummern der Beispiele, während in Abhängigkeit von den Nummern der Beispiele die Gewichtsteile an Methacrylsäureester sowie der weiteren Zusätze.

Tabelle 3

| Beispiele | 6 | 7 | 8 | 9 | 10 | 11 |
|---|---|---|---|---|---|---|
| Dimethacrylat eines propoxylierten Diphenylolpropans | 60 | 80 | 50 | 60 | 40 | 70 |
| Diacrylat eines propoxylierten Diphenylolpropans | 20 | 15 | 10 | 10 | 15 | - |
| Hydroxyethylmethacrylat | - | - | 10 | - | 5 | 5 |
| Triethylenglykol-dimethacrylat | 15 | - | 27,5 | 25 | 35 | 20 |
| p-Toluolsulfonsäurehydrazid | 1 | 1 | 0,5 | 1 | 1 | 1 |
| Benzoesäuresulfimid | 1 | 1 | 0,5 | 1 | 1 | 1 |
| N,N-Dimethyl-p-touidin-N-oxid | 1 | 1 | 0,5 | 1 | 1 | 1 |
| Benzildimethylketal | 2 | 2 | 1 | 2 | 2 | 2 |

...

Tabelle 4

| Beispiele | 6 | 7 | 8 | 9 | 10 | 11 |
|---|---|---|---|---|---|---|
| Handfestigkeit ohne UV-Licht in Minuten | 4 | 4 | 5 | 3 | 3 | 4 |
| Handfestigkeit mit UV-Licht in Sekunden | < 1 | < 1 | < 1 | < 1 | < 1 | < 1 |
| Endfestigkeit in $N/mm^2$ | 30 | 28 | 35 | 32 | 35 | 31 |

Beispiel 12

Eine Formulierung nach Beispiel 6 wurde in einer Polystyrolküvette (10x10x50 mm) durch UV-Bestrahlung ausgehärtet. Dabei betrug der Lampenabstand 10 cm und die Bestrahlzeit 60 Sekunden. Nach dieser Zeit konnte der Küvette nach Zerbrechen des Polystyrols ein fester, nicht klebriger Formkörper entnommen werden.

Beispiel 13

In der Versuchsanordnung nach Beispiel 12 wurde eine befüllte Küvette 5 Sekunden rotierend (30 Upm) bestrahlt, wobei die Außenbezirke spontan erhärteten und eine vollständige Durchhärtung bei Zimmertemperatur innerhalb von 8 Stunden erfolgte.

Beispiel 14

Ein handelsüblicher Stecker wurde mit 5,2 ml Vergußmasse entsprechend Beispiel 7 ausgegossen und aus 10 cm Entfernung 30 Sekunden lang bestrahlt. Es bildete sich sofort eine äußere feste Schicht, die ein Handling der Steckverbindung ermöglichte. Die vollständige Durchhärtung erfolgte innerhalb von 24 Stunden

. . .

bei Zimmertemperatur. Nach dieser Zeit hatte sich eine klare, homogene und flexible Vergußmasse ausgebildet.

## Patentansprüche

1) Dichtungs- und Klebmittel, Vergußmassen und Überzugsmittel auf Basis von polymerisierbaren Methacrylsäureestern sowie gegebenenfalls weiteren Hilfsstoffen, gekennzeichnet durch einen zusätzlichen Gehalt an
   a) 0,05 bis 5 Gewichtsteilen organischer Aminoxide
   b) 0,1 bis 10 Gewichtsteile einer HN-aciden Verbindung und
   c) 0,01 bis 10 Gewichtsteile eines Fotoinitiators, der geeignet ist, eine Polymerisation bei Einstrahlung von kurzwelligem Licht (UV) zu initiieren,

bezogen auf 100 Gewichtsteile der polymerisierbaren Methacrylsäureester.

2) Polymerisierbare Methacrylsäureester nach Anspruch 1, gekennzeichnet durch einen zusätzlichen Gehalt an
   a) 0,2 bis 5 Gewichtsteilen organischer Aminoxide
   b) 0,2 bis 5 Gewichtsteile einer HN-aciden Verbindung
   c) 0,05 bis 5 Gewichtsteile eine Fotoinitiators,

bezogen auf 100 Gewichtsteile des polymerisierbaren Materials.

3) Polymerisierbare Methacrylsäureester nach Ansprüchen 1 und 2, dadurch gekennzeichnet, daß die Aminoxide wenigstens einmal die Gruppierung

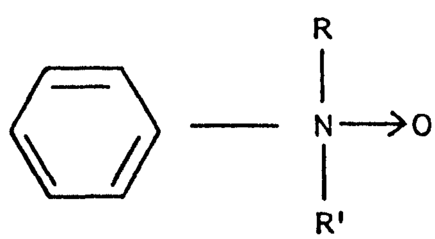

enthalten, wobei der aromatische Rest auch substituiert sein kann und R bzw. R' einen Alkylrest mit 1 bis 12 Kohlenstoffatomen bedeuten.

. . .

4) Polymerisierbare Methacrylsäureester nach Ansprüchen 1 bis 3, dadurch gekennzeichnet, daß als HN-acide Verbindungen Hydrazide von Sulfonsäuren und/oder Carbonsäuren oder Sulfimide und/oder Acylcyanamide und/oder Disulfonylimide eingesetzt werden.

5) Polymerisierbare Methacrylsäureester nach Ansprüchen 1 bis 4, dadurch gekennzeichnet, daß sie als Fotoinitiatoren Benzylketale enthalten.

6) Polymerisierbare Methacrylsäureester nach Ansprüchen 1 bis 5, dadurch gekennzeichnet, daß sie als Fotoinitiatoren Benzyldimethylketal enthalten.

7) Verwendung der polymerisierbaren Methacrylsäureester mit Zusätzen nach den Ansprüchen 1 bis 6 als Kleb- und Dichtungsmittel zur Herstellung von flächigen Verklebungen sowie zur Sicherung von Schrauben und Bolzen.

8) Verwendung der polymerisierbaren Methacrylsäureester mit Zusätzen nach den Ansprüchen 1 bis 6 als Vergußmasse für zu fixierende Elemente, insbesondere elektrischer Bauteile.